# EUROPÄISCHE PATENTANMELDUNG

(11) **EP 3 686 909 A1**
(43) Veröffentlichungstag der Anmeldung: **29.07.2020**
(21) Anmeldenummer: 20153316.3
(22) Anmeldetag: 23.01.2020
(51) Int. Cl.: H01H 1/58, H01H 23/14, H01R 13/506, H01R 24/76, H02G 3/12, H01H 11/00

(54) **ELEKTROINSTALLATIONSGERÄT MIT SOCKELAUFSATZ**

(30) Priorität: 23.01.2019 EP 19153187
(71) Anmelder: GIRA Giersiepen GmbH & Co. KG, 42477 Radevormwald (DE)
(72) Erfinder: KALINKE, Jens, 42499 Hückeswagen (DE)
(74) Vertreter: Patent- und Rechtsanwälte Dr. Solf & Zapf

(57) **Zusammenfassung**

Die vorliegende Erfindung betrifft ein Elektroinstallationsgerät, wie einen Schalter oder Taster, zur Montage in eine Einbauöffnung entlang einer Montagerichtung (M), aufweisend ein Sockelteil (1) mit mindestens zwei in einem Schaltbereich (2) des Sockelteils (1) angeordneten Kontaktgehäusen (12), wobei die Kontaktgehäuse (12) in Aufnahmekammern (6) im Sockelteil (1) angeordnet sind und mittels einer im Schaltbereich (2) angeordneten Schaltmechanik elektrisch verbindbar oder trennbar sind. Die Aufnahmekammern (6) und die Kontaktgehäuse (12) sind zum Einstecken von elektrischen Leitern ausgebildet, wobei ein Sockelaufsatz (8) in Montagerichtung (M) rückseitig des Schaltbereiches (2) am Sockelteil (1) elektrisch und mechanisch verbunden ist. Der Sockelaufsatz (8) weist mindestens eine Aufnahmekammer (10) für ein weiteres Kontaktgehäuse (12) auf, wobei über das Kontaktgehäuse (12) des Sockelaufsatzes (8) mindestens eine elektrische Verbindung zum Schaltbereich (2) des Sockelteils (8) hergestellt ist und mindestens ein weiterer elektrischer Leiter an dem Kontaktgehäuse (12) in dem Sockelaufsatz (8) einsteckbar ist. Der Sockelaufsatz (8) wird mittels einer unlösbaren Rastverbindung mit dem Sockelteil (1) verbunden.

## Beschreibung

Die Erfindung betrifft ein Elektroinstallationsgerät, wie einen Schalter oder Taster, zur Montage in eine Einbauöffnung entlang einer Montagerichtung, aufweisend ein Sockelteil mit mindestens zwei in einem Schaltbereich des Sockelteils angeordneten Kontaktgehäusen, wobei die Kontaktgehäuse in Aufnahmekammern im Sockelteil angeordnet sind und mittels einer im Schaltbereich angeordneten Schaltmechanik elektrisch verbindbar oder trennbar sind und die Aufnahmekammern und die Kontaktgehäuse zum Einstecken von elektrischen Leitern ausgebildet sind, wobei ein Sockelaufsatz in Montagerichtung rückseitig des Schaltbereiches am Sockelteil elektrisch und mechanisch verbunden ist, wobei der Sockelaufsatz mindestens eine Aufnahmekammer für ein weiteres Kontaktgehäuse aufweist, wobei über das Kontaktgehäuse des Sockelaufsatzes eine elektrische Verbindung zum Schaltbereich des Sockelteils hergestellt ist und ein weiterer elektrischer Leiter an dem Kontaktgehäuse in dem Sockelaufsatz einsteckbar ist.

Ein derartiges Elektroinstallationsgerät ist beispielsweise aus der EP 3 107 111 A1 bekannt. Dieses bekannte Elektroinstallationsgerät weist ein Sockelteil auf, das als Basis für unterschiedliche Elektroinstallationsgeräte, wie Schalter oder Taster, geeignet ist. Um die begrenzten Einsatzmöglichkeiten, insbesondere die möglichen Verschaltungen aufgrund der Anzahl der anschließbaren elektrischen Leiter, zu erweitern, ist es bekannt einen Sockelaufsatz mittels einer lösbaren Rastverbindung an dem Sockelteil anzuordnen und dadurch die Anzahl der möglichen Verschaltungen zu erweitern.

In der Praxis hat sich gezeigt, dass es für gewisse Einsatzzwecke, insbesondere bei starker Beanspruchung des Elektroinstallationsgeräts, vorteilhaft sein kann, wenn der Sockelaufsatz mit dem Sockelteil irreversibel verbunden ist, sodass selbst durch Fremdeinwirkung kein zerstörungsfreies Lösen möglich ist.

Der Erfindung liegt daher die Aufgabe zugrunde, dass aus dem Stand der Technik bekannte Elektroinstallationsgerät zu verbessern, insbesondere ein ungewolltes Lösen des Sockelteils zu verhindern.

Die Aufgabe wird erfindungsgemäß durch die Merkmale des Anspruchs 1 gelöst, wobei der Sockelaufsatz mittels einer unlösbaren Rastverbindung mit dem Sockelteil verbunden wird.

Der Vorteil der Erfindung besteht darin, ein herkömmliches Sockelteil und Sockelaufsatz derart zu modifizieren, dass insbesondere eine aus der Praxis vorteilhafte Rastverbindung einen einfachen modularen Aufbau gewährleistet, um zusätzliche elektrische Schaltungen für neue Anwendungen zu ermöglichen, zum Beispiel 2-fach Wechselschalter bei Sockelteilen mit vier Kontaktgehäusen oder 3-fach Wechselschalter bei Sockelteilen mit sechs Kontaktgehäusen, wobei die Rastverbindung gleichzeitig durch ihre Unlösbarkeit vorteilhaft für die Arbeits- und Benutzungssicherheit ist, weil eine zerstörungsfreie Demontage praktisch unmöglich ist, so dass Fremdeinwirkung und ungewolltes Lösen sowie Lösen und Wiederherstellen verhindert und erkannt werden kann.

Dabei kann vorteilhafterweise beim Verbinden von Sockelteil und Sockelaufsatz auf Montagewerkzeuge verzichtet werden. Insbesondere bleibt vorteilhaft der vereinfachte Herstellungsprozess erhalten. Durch die Option, das Sockelteil modular mit einem Sockelaufsatz zu erweitern, kann die Anzahl der herzustellenden Sockelteilvarianten verringert und die Produktion an gleichförmigen Teilen erhöht werden. Das spart Produktions- und Lagerkosten.

In einer vorteilhaften Ausführungsform der Erfindung weist das Sockelteil mindestens eine Rastöffnung und der Sockelaufsatz mindestens einen in einer Einsteckrichtung entgegen die Montagerichtung in die Rastöffnung eingeführten Rastarm auf, wobei die Rastöffnung eine Auflagefläche an ihrem Innenumfang aufweist, die derart ausgebildet ist, dass sie für eine am freien Ende des Rastarms gebildete Raststufe in Einsteckrichtung einen Hinterschnitt bildet, wobei die Rastöffnung eine Auflagefläche für die Raststufe und eine der Auflagefläche in der Rastöffnung gegenüberliegend angeordnete Rampe aufweist, wobei die Rampe in Einsteckrichtung gesehen hinter der Auflagefläche angeordnet ist und die Querschnittsfläche der Rastöffnung in Einsteckrichtung verringert. Dadurch wirkt vorteilhaft der Rastarm beim Passieren der Rastöffnung derart mit der Rampe zusammen, dass die Raststufe über die Auflagefläche gedrückt wird. Im eingesteckten Zustand liegt die Raststufe auf der Auflagefläche auf. Dadurch entsteht ein Formschluss, welcher das Entnehmen, d. h. das Herausziehen des Sockelaufsatzes entgegen der Einsteckrichtung verhindert. Weiterhin verhindert die Rampe, dass die Raststufe von der Auflagefläche abrutscht.

Gemäß einer weiteren Ausführung der Erfindung weist die Rastöffnung in Einsteckrichtung auf der Seite der Auflagefläche einseitig einen sich verjüngenden Oberflächenverlauf bis zur Auflagefläche auf. Durch den einseitig sich verjüngenden Oberflächenverlauf der Rastöffnung wird der Rastarm beim Einsteckvorgang besonders kontrolliert durch die Rastöffnung geführt. Weiterhin kann synergetisch durch die Verjüngung die Auflagefläche für die Raststufe geschaffen werden.

Weiterhin stellen in einer bevorzugten Ausführungsform der Erfindung die Kontaktgehäuse im Sockelaufsatz die elektrische Verbindung zum Schaltbereich, insbesondere mittels Kontaktfahnen, her. Die Kontaktfahnen sind leicht mit den Kontaktgehäusen bzw. mit den elektrischen Verbindungen zu verbinden und liegen besonders stabil und platzsparend im Schaltbereich.

In einer anderen vorteilhaften Ausführung des Elektroinstallationsgeräts weist der Schaltbereich zwischen zwei sich gegenüberliegenden Aufnahmekammern im Boden jeweils eine Kontaktöffnung zu dem in Montagerichtung rückseitig angeordneten Sockelaufsatz auf. Besonders vorteilhaft wird die erfindungsgemäße Lösung durch Kontaktöffnungen dahingehend verbessert, dass ein nachträgliches Bearbeiten des Schaltbereiches, insbesondere Bohren, für die elektrische Verbindung vom Sockelaufsatz zum Schaltbereich, insbesondere mittels Kontaktfahnen, entfällt. Insbesondere ragen vorzugsweise die Kontaktfahnen der Kontaktgehäuse im Sockelaufsatz durch die Kontaktöffnung in den Schaltbereich, wobei die Kontaktöffnungen bevorzugt korrespondierend zu den Kontaktfahnen schlitzförmig ausgebildet sind.

Insbesondere sind der Sockelaufsatz und/oder das Sockelteil jeweils als einstückiges Spritzgussteil geformt. Insbesondere ist dabei das Sockelteil derart ausgebildet, dass es durch ausschließlich zwei Teilformen schieberfrei geformt beziehungsweise entformt werden kann. Dadurch können die betreffenden Teile vereinfacht hergestellt und günstig produziert werden.

Weitere vorteilhafte Ausgestaltungen der Erfindung ergeben sich aus der folgenden Figurenbeschreibung und den abhängigen Unteransprüchen. Es zeigen:
- Fig. 1: eine perspektivische Explosionsansicht einer Baugruppe einer ersten Ausführungsform eines erfindungsgemäßen Elektroinstallationsgeräts,
- Fig. 2: eine perspektivische Rückansicht entgegen der Montagerichtung M gemäß Fig. 1 eines erfindungsgemäßen Sockelteils mit einem montierten Sockelaufsatz,
- Fig. 3: eine Draufsicht in Montagerichtung M gemäß Fig. 1 auf das Sockelteil mit montiertem Sockelaufsatz gemäß Fig. 2,
- Fig. 4: eine Schnittansicht entlang der Linie A-A in Fig. 3,
- Fig. 5: eine Detailansicht des Bereichs D in Fig. 4,
- Fig. 6: eine perspektivische Rückansicht entgegen der Montagerichtung M gemäß Fig. 1 einer zweiten Ausführung eines erfindungsgemäßen Sockelteils mit einem montierten Sockelaufsatz,
- Fig. 7: eine Detailansicht des Bereiches D in Fig. 4 einer weiteren Ausführungsform der Erfindung,
- Fig. 8: eine Schnittansicht einer weiteren Ausführungsform der Erfindung entlang der Linie A-A in Fig. 3, und
- Fig. 9: eine Detailansicht des Bereichs C in Fig. 4,

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit Merkmalen eines anderen Ausführungsbeispiels von Bedeutung für den Gegenstand der Erfindung.

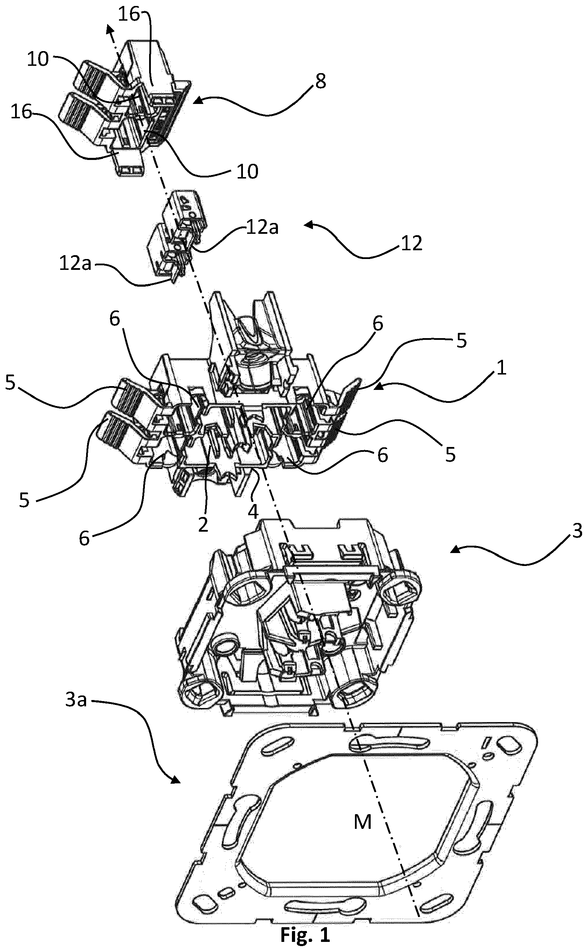

In Figur 1 ist eine Baugruppe eines erfindungsgemäßen Elektroinstallationsgerätes gemäß einer ersten Ausführungsform dargestellt. Das Sockelteil 1 wird vorzugsweise mit einem Sockeloberteil 3 zu einem Sockel zusammengefügt und insbesondere an einem Tragring 3a befestigt. Dafür weist der Tragring 3a und/oder das Sockeloberteil 3 insbesondere Verbindungsmittel auf, die für ein Aufstecken oder Aufklemmen von nicht dargestellten Design- und Bedienelementen, wie zum Beispiel Rahmenelementen und Schalt- oder Tastwippen, ausgebildet sind, so dass das Elektroinstallationsgerät insbesondere als Schalter oder Taster angepasst ist.

Das Elektroinstallationsgerät ist zur Montage in einer Einbauöffnung in einer, wie in Figur 1 dargestellten, Montagerichtung M ausgebildet. Das Elektroinstallationsgerät weist ein Sockelteil 1 mit mindestens zwei in einem Schaltbereich 2 des Sockelteils 1 angeordneten nicht dargestellten Kontaktgehäusen auf, wobei die Kontaktgehäuse in Aufnahmekammern 6 im Sockelteil 1 angeordnet sind und mittels einer im Schaltbereich 2 angeordneten Schaltmechanik elektrisch verbindbar oder trennbar sind. Das in Figur 1 dargestellte Sockelteil 1 hat einen bevorzugten Schaltbereich 2, mit vier Aufnahmekammern 6 in welchem bis zu vier Kontaktgehäuse zur Verbindung mit nicht dargestellten elektrischen Leitern angeordnet und mittels einer Schaltmechanik elektrisch verbindbar oder trennbar sind.

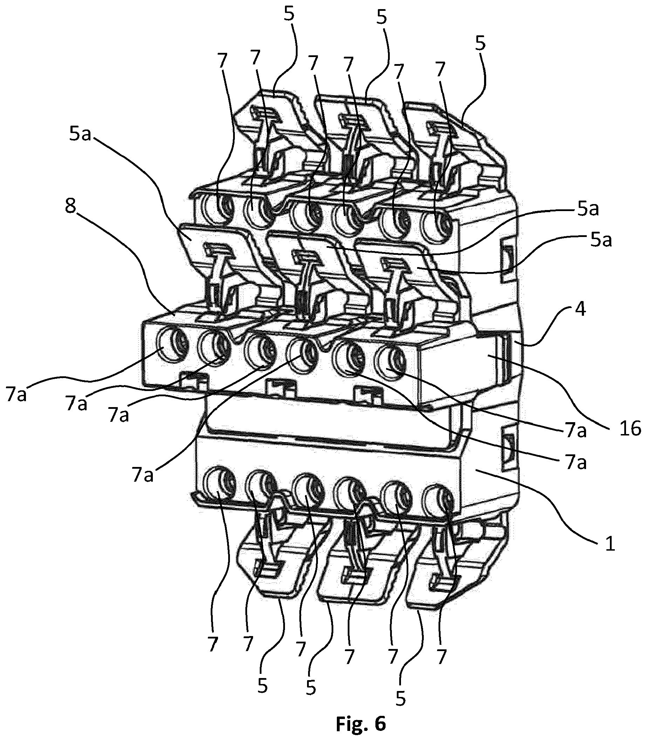

Weiterhin weist eine vorteilhafte Ausführung, welche in Figur 6 dargestellt ist, ein Sockelteil 1 mit einem bevorzugten Schaltbereich 2 auf. Dieser Schaltbereich 2 hat insbesondere sechs Aufnahmekammern 6, in welche bis zu sechs Kontaktgehäuse zur Verbindung mit elektrischen Leitern angeordnet und mittels einer Schaltmechanik elektrisch verbindbar oder trennbar sind.

Die Aufnahmekammern 6 und die Kontaktgehäuse sind insbesondere zum Einstecken von elektrischen Leitern ausgebildet. Ein Sockelaufsatz 8 ist in Montagerichtung M rückseitig des Schaltbereiches 2 am Sockelteil 1 elektrisch und mechanisch verbunden. Der Sockelaufsatz 8 weist mindestens eine, insbesondere zwei, am bevorzugtesten drei, Aufnahmekammern 10 für ein weiteres Kontaktgehäuse 12 auf, wobei über das Kontaktgehäuse 12 des Sockelaufsatzes 8 mindestens eine elektrische Verbindung zum Schaltbereich 2 des Sockelteils 8 hergestellt ist und mindestens ein weiterer elektrischer Leiter an dem Kontaktgehäuse 12 in den Sockelaufsatz 8 einsteckbar ist.

Die Baugruppe, welche in Figur 1 abgebildet ist, zeigt für eine bessere Übersicht lediglich die Aufnahmekammern 6 im Sockelteil 1 und nicht die Kontaktgehäuse des Sockelteils 1. Die Kontaktgehäuse 12 in den Aufnahmekammern 10 des Sockelaufsatzes 8 sind dargestellt. Die Figuren 1 bis 5 zeigen eine erste vorteilhafte Ausführung des Sockelteils 1, bei welcher das Sockelteil 1 vier Aufnahmekammern 6 aufweist, in die bis zu vier Kontaktgehäuse eingesetzt werden, und mit welchen über den Schaltbereich 2 eine Schaltung von elektrischen Verbindungen ermöglicht wird.

Um die elektrischen Leiter an den Kontaktgehäusen 12 anzuschließen, weisen die Kontaktgehäuse 12 in einer vorteilhaften Ausführung der Erfindung vorzugsweise eine Verbindungsmechanik, insbesondere eine Klemmfeder zum Einklemmen mindestens eines elektrischen Leiters auf, wobei, wie in den Figuren 1, 2, 3 und 6 dargestellt, ein schwenkbarer Lösehebel 5 die Klemmfeder betätigt. Vorzugsweise werden die elektrischen Leiter durch Kontaktlöcher 7 in die Aufnahmekammer 10 eingeführt, die in einem Bodenabschnitt der Aufnahmekammern 6 des Sockelteils 1 angeordnet sind.

Um einen elektrischen Leiter an dem Kontaktgehäuse 12 in dem Sockelaufsatz 8 anzuschließen, ist es besonders vorteilhaft, wenn der Sockelaufsatz 8 eine Verbindungsmechanik zum Verbinden und Lösen von elektrischen Leitern aufweist, ähnlich wie jene, die das Sockelteil 1 aufweist, besonders bevorzugt die gleiche, die das Sockelteil 1 aufweist. Besonders bevorzugt weisen die Kontaktgehäuse 12 dafür eine Klemmfeder zum Einklemmen mindestens eines elektrischen Leiters auf, wobei diese insbesondere mittels eines schwenkbaren Lösehebels 5a betätigt wird, und die elektrischen Leiter durch Kontaktlöcher 7a mit dem Kontaktgehäuse 12 verbunden werden.

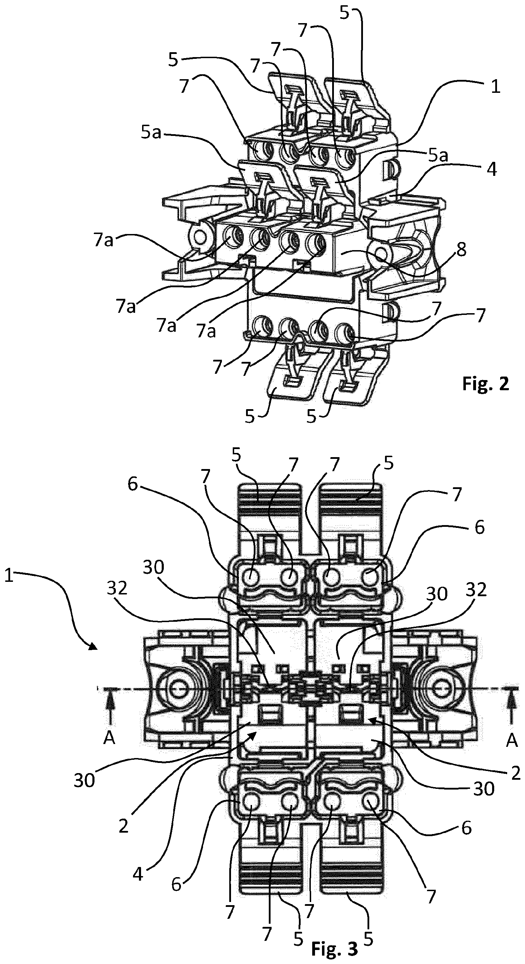

Erfindungsgemäß ist der Sockelaufsatz 8 mittels einer unlösbaren Rastverbindung mit dem Sockelteil 1 verbunden. Dieser montierte Zustand ist in den Figuren 2 und 6 abgebildet. Vorteilhaft kann durch die Rastverbindung das Sockelteil 1 je nach Bedarf an elektrischen Verbindungen und Schaltmöglichkeiten mit einem Sockelaufsatz 8 erweitert werden, wobei beim Verbinden von Sockelteil 1 und Sockelaufsatz 8 auf Montagewerkzeuge, zum Beispiel Schraubendreher etc., verzichtet werden kann. Weiterhin erleichtert eine Rastverbindung die Automatisierung des Montageprozesses durch das einfachere Verbindungsverfahren und die geringere Anzahl an Arbeitsschritten.

Weiterhin vorteilhaft ist für die Arbeitssicherheit und Benutzungssicherheit, dass die Rastverbindung derart unlösbar ist, dass eine zerstörungsfreie Demontage praktisch unmöglich ist, so dass Fremdeinwirkung und ungewolltes Lösen sowie Lösen und Wiederherstellen verhindert und erkannt wird.

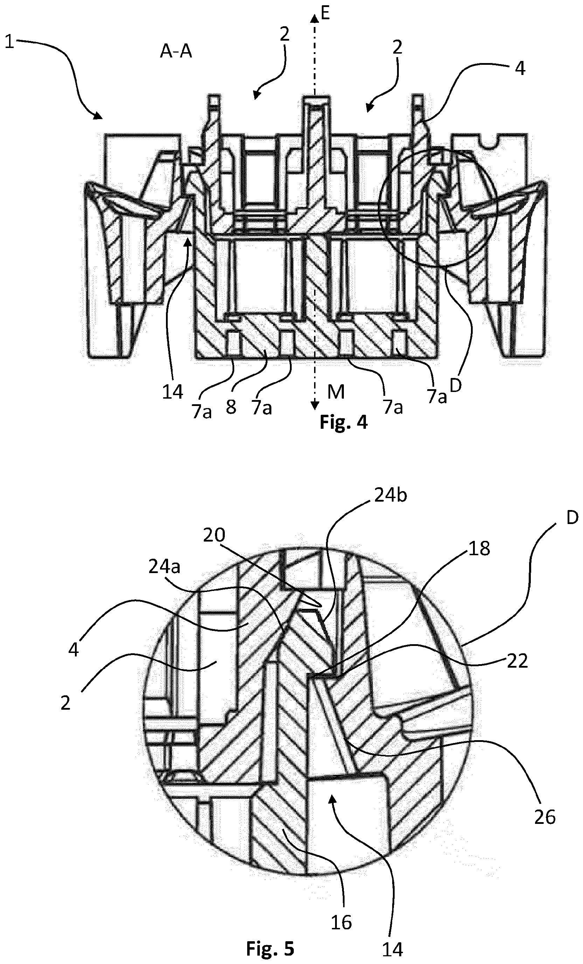

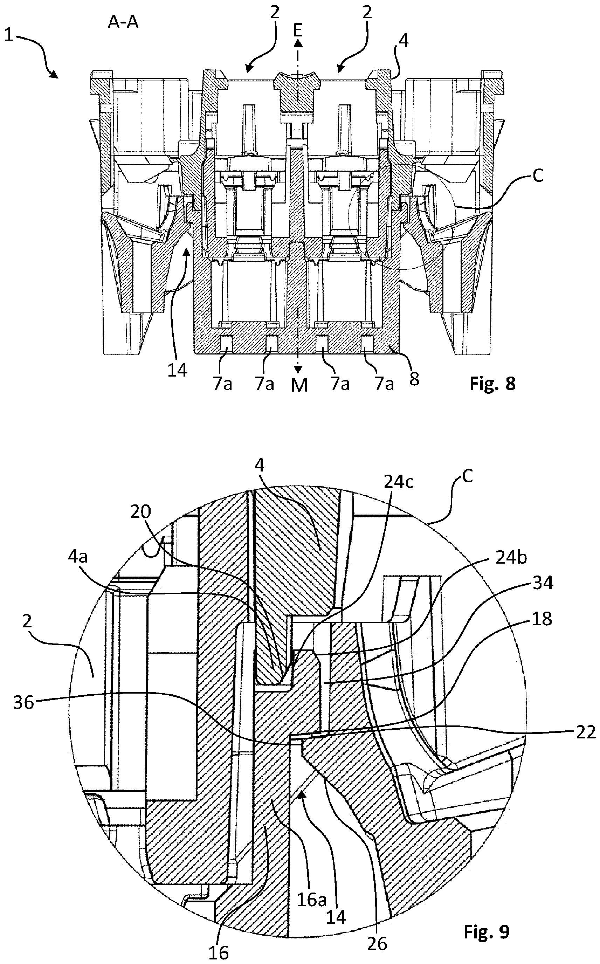

Vorzugsweise erfolgt die Montage des erfindungsgemäßen Elektroinstallationsgeräts, indem der Sockelaufsatz 8 in das Sockelteil 1 in einer Einsteckrichtung E entgegen der Montagerichtung M eingesteckt wird. Die Montagerichtung M und die in die entgegengesetzte Richtung weisende Einsteckrichtung E sind als Pfeile in den Figuren 4 und 8 gekennzeichnet.

Die Detailansichten in den Figuren 5, 7 und 9 zeigen eine bevorzugte Ausführung des Elektroinstallationsgeräts. Gemäß dieser Ausführungsform weist das Sockelteil 1 mindestens eine Rastöffnung 14 und der Sockelaufsatz 8 mindestens einen, in Einsteckrichtung E entgegen der Montagerichtung M in die Rastöffnung 14 eingeführten Rastarm 16 auf. Die Rastöffnung 14 weist eine Auflagefläche 22 an ihrem Innenumfang auf, die derart ausgebildet ist, dass sie für eine, am freien Ende des Rastarms 16 gebildete Raststufe 18 in Einsteckrichtung einen Hinterschnitt bildet. Dabei weist die Rastöffnung 14 die Auflagefläche 22 für die Raststufe 18 und eine der Auflagefläche 22 in der Rastöffnung 14 gegenüberliegend angeordnete Rampe 20 auf. Die Rampe 20 ist in Einsteckrichtung E gesehen hinter der Auflagefläche 22 angeordnet ist und verringert die Querschnittsfläche der Rastöffnung 14 in Einsteckrichtung E. Vorteilhafterweise wirkt beim Einstecken des Sockelaufsatzes 8 in das Sockelteil 1 der Rastarm 16 beim Passieren der Rastöffnung 14 derart mit der Rampe 20 zusammen, dass die Raststufe 18 über die Auflagefläche 22 gedrückt wird.

Insbesondere wird gemäß dieser besonderen Ausführung beim Einsteckvorgang in Einsteckrichtung E der Rastarm 16 durch die Rampe 20 und die Rastöffnung 14 im Bereich der Auflagefläche 22 derart elastisch gebogen, dass dieser gekrümmt und mit seinem freien Ende entlang der Schrägen der Rampe 20 geführt wird. Insbesondere weist die Rastöffnung 14 die geringste Querschnittsfläche im Bereich der Auflagefläche 22 auf. Vorteilhafterweise kann der Rastarm 16 durch die elastische Verformung beim Einstecken in Einsteckrichtung E den Bereich der Auflagefläche 22 passieren, wobei der Rastarm 16, sobald er mit seiner Raststufe 18 den Bereich der Auflagefläche 22 passiert hat, wegen des fehlenden Widerstands der Rastöffnung 14 seinen bogenartigen, gekrümmten Zustand verlässt. Aufgrund des ausschließlich von der Rampe 20 auf den Rastarm 16 einseitig wirkendend Drucks wird die Raststufe 18 des Rastarms 16 über die Auflagefläche 22 gedrückt und erzeugt eine formschlüssige unlösbare Verbindung. Um den Einsteckvorgang rückgängig zu machen, müsste der Rastarm in den, durch die Rastöffnung 14 und die Rampe 20 erzeugten, bogenartigen Zustand versetzt werden, was jedoch mit herkömmlichen Werkzeugen und unter normalen Bedingungen nicht möglich ist.

Unlösbare Rastverbindung meint insbesondere eine unter normalen Einsatzbedingungen nicht zerstörungsfrei lösbare oder nur mit erheblichen Bemühungen, in einem Ausmaß, weit über dem gewöhnlichen Einsatz, lösbare Verbindung.

Im Sinne eines verbesserten Zusammenwirkens zwischen Rastarm 16 und Rampe 20 ist die Rampe 20 vorzugsweise in Einsteckrichtung E gesehen hinter der Auflagefläche 22 angeordnet. Diese bevorzugte Anordnung hat neben der Wirkung für die unlösbare Rastverbindung die Folge, dass der Rastarm 16 starrer und die Raststufe 18 ausgeprägter ausgebildet sein kann. Alternativ dazu würde bei einer vorgezogenen Rampe 20 d. h. wenn die Rampe 20 in Einsteckrichtung E gesehen vor der Auflagefläche 22 angeordnet ist, der Rastarm S-förmig verformt werden. Dadurch treten in dem Rastarm 16 zusätzliche Bauteilspannungen auf, welche die Lebensdauer und/oder das Haltevermögen der Rastverbindung verschlechtern.

In einer vorteilhaften Ausführung des Sockelaufsatzes 8, wie sie in Figur 1 dargestellt ist, weist der Sockelaufsatz 8 insbesondere zwei Rastarme 16 auf, welche vorzugsweise in zwei zu diesen korrespondierend im Sockelteil 1 angeordnete Rastöffnungen 14 beim Einstecken in Einsteckrichtung E eingreifen und insbesondere auf oben beschriebene Weise eine unlösbare Rastverbindung herstellen.

Um das Auflageverhalten der Raststufe 18 auf der Auflagefläche 22 zu verbessern, erstrecken sich vorzugsweise die Raststufe 18 und/oder die Auflagefläche 22 rechtwinklig zu der Einsteckrichtung E. In einer anderen vorteilhaften Ausführung erstrecken sich die Raststufe 18 und die Auflagefläche 22, alternativ oder zusätzlich zur obigen Ausführung, parallel zueinander. Eine parallele Ausführung der beiden Flächen maximiert die mögliche Überschneidung der beiden Flächen, wodurch die Kontaktfläche, auf der die Raststufe 18 auf der Auflagefläche 22 aufliegt, effektiv ausgenutzt wird.

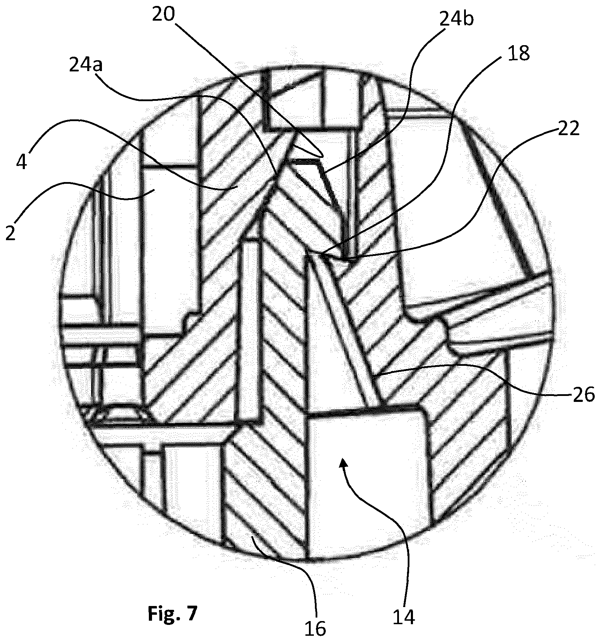

Gemäß einer weiteren vorteilhaften Ausführung der Erfindung, die in Figur 7 dargestellt ist, erstrecken sich die Raststufe 18 und/oder die Auflagefläche 22 in einem Winkel zur Einsteckrichtung E, wobei das zur Auflagefläche weisende Ende der Raststufe 18 in Einsteckrichtung E gesehen zurückversetzt ist und das zur Raststufe 18 weisende Ende der Auflagefläche 22 in Montagerichtung M gesehen zurückversetzt ist. Eine derartig vorteilhafte Ausführung verbessert den Halt und die Beständigkeit der Rastverbindung.

Gemäß einer bevorzugten Alternative der Erfindung weist der Rastarm 16, wie in den Figuren 5 und 7 dargestellt, an seinem feien Ende eine erste Schräge 24a auf, die die Querschnittsfläche des Rastarms 16 in Einsteckrichtung E verringert. Vorteilhaft gleitet die Schräge 24a beim Einstecken über die Rampe 20 und verbessert im Wesentlichen dadurch die Montagesicherheit und das Einsteckverhalten. Weiterhin wird ein Verkanten verhindert und das haptische Feedback beim Einstecken des Sockelaufsatzes 8 in das Sockelteil 1 durch die erste Schräge 24a verbessert.

Die in den Figuren 5, 7 und 9 dargestellten Ausführungsformen zeigen noch ein weiteres vorteilhaftes Merkmal. Insbesondere weist der Rastarm 16 an seinem freien Ende an der der Auflagefläche 22 zugewandten Seite eine zweite Schräge 24b auf, die die Querschnittsfläche des Rastarms 16 in Einsteckrichtung E verringert und entgegen der Einsteckrichtung E die Raststufe 18 bildet. Bei dieser Ausführung wird, ähnlich wie bei der vorteilhaften ersten Schräge 24a, der Einsteckvorgang optimiert. Durch die zweite Schräge 24b wird ein Verkanten verhindert und das haptische Feedback beim Einstecken in das Sockelteil 1 wie beschrieben verbessert.

Besonders vorteilhaft ist bei den in den Figuren 4, 5 und 7 dargestellten Ausführungsformen der Rastarm 16 mit seinem freien Ende zumindest zwischen der Rampe 20 und der Auflagefläche 22 verspannt. Dadurch wird eine besonders sichere und besonders unlösbare Rastverbindung erzeugt.

Vorzugsweise weist die Rastöffnung 14 in Einsteckrichtung E gesehen hinter der Auflagefläche 22, wie in Figur 9 dargestellt, einen Aufnahmeraum 34 zur Aufnahme eines freien Endes des Rastarms 16 auf. In den Figuren 8 und 9 ist dabei eine besonders vorteilhafte Ausführung der Erfindung dargestellt, gemäß welcher der Aufnahmeraum 34 derart ausgebildet ist, dass das freie Ende des Rastarms 16 rastend in dem Aufnahmeraum 34 angeordnet wird, wobei das freie Ende des Rastarms 16 spannungsfrei in dem Aufnahmeraum 34 angeordnet ist. Insbesondere wenn es bei der Fertigung des Elektroinstallationsgerätes zu Toleranzen in den Abmessungen des Sockelteils 1 und/oder des Sockelaufsatzes 8 kommt, ermöglicht eine spannungsfreie Anordnung den Ausgleich von Abweichungen der Abmessungen und stellt die Funktion weiterhin sicher.

Spannungsfrei bedeutet in diesem Zusammenhang, dass das freie Ende des Rastarms 16 zumindest an jeweils einer Seite in Einsteckrichtung E und/oder senkrecht zur Einsteckrichtung E einen freien Spalt zu einem Innenumfang der Rastöffnung 14 aufweist.

Zweckmäßig wird eine spannungsfreie Anordnung dadurch ermöglicht, dass, wie in Figur 9 dargestellt, ein im Aufnahmeraum 34 angeordneter Teil des freien Endes des Rastarms 16 einen geringeren Querschnitt aufweist als der Aufnahmeraum 34.

Vorzugsweise ist am freien Ende des Rastarms 16 eine in Einsteckrichtung E und/oder senkrecht zur Einsteckrichtung E geöffnete rechteckförmige Ausnehmung 24c ausgebildet. Eine Ausführung der Erfindung ist vorteilhaft in den Figuren 8 und 9 dargestellt. Mittels der Ausnehmung 24c wird dabei vorteilhaft die Querschnittsfläche des Rastarms 16 in Einsteckrichtung E gesehen hinter der Raststufe 18 sprunghaft verringert. Die Ausnehmung 24c hat den Vorteil, dass eine Verspannung des freien Endes des Rastarms 16 mit der Rampe 20 und der Auflagefläche 22 verringert, insbesondere verhindert wird.

Besonders vorteilhaft kann der Rastarm 16, nicht dargestellt, sowohl eine Ausnehmung 24c für eine spannungsarme Anordnung, als auch eine erste abflachende Schräge 24a für ein besonders vorteilhaftes Einführen über die Rampe 20 in Einsteckrichtung E aufweisen.

Eine zweckmäßige Ausbildung des Rastarms 16 zeichnet sich dadurch aus, dass sich der Rastarm 16, wie in Figur 9 dargestellt, in einem Teilabschnitt 16a in Einsteckrichtung bis zu der Raststufe 18 fluchtend mit einem Teilabschnitt 4a einer Außenwand 4 des Sockelteils 1 und fluchtend mit der Ausnehmung 24c erstreckt.

In einer vorteilhaften Ausführung des erfindungsgemäßen Elektroinstallationsgeräts weist die Rastöffnung 14 in Einsteckrichtung E auf der Seite der Auflagefläche 22 einseitig einen sich verjüngenden Oberflächenverlauf 26 bis zur Auflagefläche 22 auf. Insbesondere die Figuren 5 und 7 zeigen die beschriebene Ausführung der Rastöffnung 14. Vorteilhaft wird durch den sich verjüngenden Oberflächenverlauf 26 der Rastarm 16 beim Einsteckvorgang in Einsteckrichtung E besonders kontrolliert durch die Rastöffnung 14 geführt. Weiterhin hat der sich verjüngende Oberflächenverlauf 26 den Vorteil, dass die Auflagefläche 22 in Montagerichtung M gestützt wird und eine elastische Verformung der Auflagefläche 22 und ein daraus resultierendes Lösen der Rastverbindung verhindert.

Insbesondere ist, wie in Figur 9 dargestellt, zwischen dem sich verjüngenden Verlauf 26 und der Auflagefläche 22 ein sich in Einsteckrichtung E erstreckender Übergangsabschnitt 36 ausgebildet, welcher den sich verjüngenden Verlauf 26 und die Auflagefläche 22 verbindet. Der Übergangsabschnitt 36 verhindert zweckmäßig, dass ein unmittelbarer Übergang zwischen dem sich verjüngenden Verlauf 26 und der Auflagefläche 22 entsteht, welcher beim Einführen des Rastarms 16 in die Rastöffnung 14 unter Spannung brechen könnte. Weiterhin wird ein zu spitzwinkliger Übergang verhindert, welcher den Rastarm 16 beschädigen könnte.

Die bevorzugte Ausführung gemäß Figur 5 und 7 zeigt, dass der Rastarm 16 an seinem freien Ende eine erste Schräge 24a und eine zweite Schräge 24b ausgebildet hat, wobei die erste Schräge 24a vorteilhaft mit der Rampe 20 und die zweite Schräge 24b insbesondere mit dem sich verjüngenden Oberflächenverlauf 26 der Rastöffnung 14 beim Einstecken zusammenwirkt. Vorteilhaft kann dadurch die Rastöffnung 14 insbesondere im Einführbereich vergrößert werden, so dass die Rastarme 16 leichter eingeführt werden können, wobei beim weiteren Einstecken der Rastarm 16 zunächst von dem sich verjüngenden Oberflächenverlauf 26 und beim noch weiteren Einstecken von der Rampe 20 geführt wird und insbesondere im Bereich der Auflagefläche 22 den vorteilhaften gebogenen gekrümmten Zustand annimmt, wodurch beim Einstecken die Raststufe 18 in einen unlösbaren Formschluss mit der Auflagefläche 22 versetzt wird.

Gemäß einer weiteren Ausführung ist der Schaltbereich 2 des Sockelteils 1 insbesondere von einer Außenwand 4 umschlossen, wobei die Rastverbindung vorzugsweise außerhalb der Außenwand 4 des Schaltbereichs 2 angeordnet ist. Praktischerweise wird durch diese Ausführung der Schaltbereich 2 zusätzlich vor Fremdeinwirkung sowie vor Schmutz geschützt. Weiterhin wird verhindert, dass insbesondere die Rastarme 16 beim Einstecken Elemente im Schaltbereich 2 verstellen oder beschädigen. Ebenso wird der Bauraum im Schaltbereich 2 für Schaltmittel nicht durch Rastmittel verringert und das Raumangebot möglichst groß gehalten.

Insbesondere ist infolgedessen die Rampe 20 an der Außenwand 4 des Schaltbereiches 2 angeordnet. Synergetisch mit der Außenwand 4 wird der zur Verfügung stehende Bauraum optimal genutzt, und es sind keine zusätzlichen Elemente notwendig, um eine derartige Rastverbindung, aufweisend eine Rampe, auszubilden.

Figur 1 zeigt weiterhin eine vorteilhafte Ausführung, bei welcher die Kontaktgehäuse 12 im Sockelaufsatz 8 die elektrische Verbindung zum Schaltbereich 2 im Sockelteil 1 mittels Kontaktfahnen 12a herstellen. Bei Versuchen hat sich gezeigt, dass Kontaktfahnen 12a für die Verbindung mit den elektrischen Verbindungen im Schaltbereich 2 besonders vorteilhaft sind, da diese sehr stabil in den Schaltbereich 2 ragen, wobei die ausgeprägte Breite eine Verbindung erleichtert und die relativ zur Breite schmale Höhe den Bauraumbedarf reduziert.

In einer anderen bevorzugten Ausführung weist der Schaltbereich 2 zwischen zwei sich gegenüberliegenden Aufnahmekammern 6 im Boden 30 jeweils eine Kontaktöffnung 32 zu dem in Montagerichtung M rückseitig angeordneten Sockelaufsatz 8 auf. In der vorteilhaften Ausführung der Erfindung in Figur 3 ist jeweils zwischen zwei gegenüberliegenden Aufnahmekammern 6 der vier Aufnahmekammern 6 eine Kontaktöffnung 32 angeordnet. In einer weiteren vorteilhaften Ausführung der Erfindung in Figur 6 ist jeweils zwischen zwei gegenüberliegenden Aufnahmekammern 6 der sechs Aufnahmekammern 6 eine Kontaktöffnung 32 angeordnet. Die in Figur 3 dargestellte Ausführung weist daher zwei, und die in Figur 6 dargestellte Ausführung drei Kontaktöffnungen 32 auf, so dass besonders vorteilhaft, wie in Figur 2 dargestellt, ein Sockelaufsatz 8 mit zwei Kontaktgehäusen 12 mittels einer Rastverbindung mit dem Sockelteil 1 verbunden ist. Besonders vorteilhaft entfällt durch die schon bei der Herstellung des Sockelteils 1 berücksichtigten Kontaktöffnungen 32 gemäß den obigen Ausführungen ein nachträgliches Formen, insbesondere Bohren, von Kontaktöffnungen 32.

Besonders bevorzugt ragen die Kontaktfahnen 12a der Kontaktgehäuse 12 im Sockelaufsatz 8 durch die Kontaktöffnungen 32 in den Schaltbereich 2, wobei die Kontaktöffnungen 32 korrespondierend zu den Kontaktfahnen 12a schlitzförmig ausgebildet sind.

Um den Herstellungsprozess zu optimieren und Kosten und Taktung zu optimieren, sind gemäß einer vorteilhaften Ausführungsform der Sockelaufsatz 8 und/oder das Sockelteil 1 jeweils als einstückiges Spritzgussteil geformt.

Insbesondere für einen optimierten Herstellungsprozess ist gemäß einer besonders bevorzugten Ausführungsform die Rastöffnung 14 in Montagerichtung M und in Einsteckrichtung E weisend offen. Dadurch kann die Rastöffnung 14 des Sockelteils 1 zusammen mit der Auflagefläche 22 mit nur zwei Spritzgussformen in einem Spritzgussvorgang und besonders vorteilhaft ohne zusätzliche Schieber gefertigt werden. Insbesondere kann die Rastöffnung 14 durch diese Ausführungsform sämtliche vorgenannten vorteilhaften Merkmale aufweisen und vorteilhafterweise ohne Nachbehandlungen und dadurch in einem einzigen Spritzgussvorgang gefertigt werden. Insbesondere bekannte unlösbare Rastverbindungen mussten bislang zumindest einseitig verschlossen sein, damit ein Werkzeug die Rastmittel nicht trennen kann.

Figur 6 zeigt eine zweite Ausführungsform der Erfindung. Im Gegensatz zu den Ausführungen, welche in den Figuren 1 bis 5 und 7 bis 9 dargestellt sind, weist die in Figur 6 dargestellte Ausführungsform als Unterschied auf, dass das Sockelteil 1 zwei weitere, insgesamt sechs, Aufnahmekammern 6 für Kontaktgehäuse aufweist. Dazu korrespondierend weist der modular montierbare Sockelaufsatz 8 ebenfalls drei Aufnahmekammern 10 für Kontaktgehäuse 12 auf. Es ist aber ebenfalls möglich, an das in Figur 6 dargestellte Sockelteil 1 einen Sockelaufsatz 8 mit einer geringeren Anzahl von Aufnahmekammern 10 zu montieren und damit die Anzahl der zusätzlich elektrisch verbindbaren Leiter variabel an die Einsatzzwecke anzupassen. Weiterhin kann das in Figur 6 dargestellte Sockelteil 1 bzw. der dargestellte Sockelaufsatz 8 jedes Merkmal aufweisen, welches oben in Bezug auf die Figuren 1 bis 5 und 7 bis 9 beschrieben wurde.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Sockelteil
- 2: Schaltbereich
- 3: Sockeloberteil
- 3a: Montagering
- 4: Außenwand des Schaltbereichs
- 4a: Teilabschnitt der Außenwand
- 5: Lösehebel am Sockelteil
- 5a: Lösehebel am Sockelaufsatz
- 6: Aufnahmekammer im Sockelteil
- 7: Kontaktlöcher im Sockelteil
- 7a: Kontaktlöcher im Sockelaufsatz
- 8: Sockelaufsatz
- 10: Aufnahmekammer im Sockelaufsatz
- 12: Kontaktgehäuse
- 12a: Kontaktfahnen
- 14: Rastöffnung
- 16: Rastarm
- 16a: Teilabschnitt des Rastarms
- 18: Raststufe
- 20: Rampe
- 22: Auflagefläche
- 24a: Erste abflachende Schräge
- 24b: Zweite abflachende Schräge
- 24c: Ausnehmung
- 26: Verjüngung
- 30: Bodenelemente
- 32: Kontaktöffnungen
- 34: Aufnahmeraum
- 36: Übergangsabschnitt
- M: Montagerichtung
- E: Einsteckrichtung

## Patentansprüche

1. Elektroinstallationsgerät, wie einen Schalter oder Taster, zur Montage in eine Einbauöffnung entlang einer Montagerichtung (M), aufweisend ein Sockelteil (1) mit mindestens zwei in einem Schaltbereich (2) des Sockelteils (1) angeordneten Kontaktgehäusen (12), wobei die Kontaktgehäuse (12) in Aufnahmekammern (6) im Sockelteil (1) angeordnet sind und mittels einer im Schaltbereich (2) angeordneten Schaltmechanik elektrisch verbindbar oder trennbar sind und die Aufnahmekammern (6) und die Kontaktgehäuse (12) zum Einstecken von elektrischen Leitern ausgebildet sind, wobei ein Sockelaufsatz (8) in Montagerichtung (M) rückseitig des Schaltbereiches (2) am Sockelteil (1) elektrisch und mechanisch verbunden ist, wobei der Sockelaufsatz (8) mindestens eine Aufnahmekammer (10) für ein weiteres Kontaktgehäuse (12) aufweist, wobei über das Kontaktgehäuse (12) des Sockelaufsatzes (8) mindestens eine elektrische Verbindung zum Schaltbereich (2) des Sockelteils (8) hergestellt ist und mindestens ein weiterer elektrischer Leiter an dem Kontaktgehäuse (12) in dem Sockelaufsatz (8) einsteckbar ist,
**dadurch gekennzeichnet, dass**
der Sockelaufsatz (8) mittels einer unlösbaren Rastverbindung mit dem Sockelteil (1) verbunden wird.

2. Elektroinstallationsgerät nach Anspruch 1,
**dadurch gekennzeichnet, dass** das Sockelteil (1) mindestens eine Rastöffnung (14) und der Sockelaufsatz (8) mindestens einen in einer Einsteckrichtung (E) entgegen der Montagerichtung (M) in die Rastöffnung (14) eingeführten Rastarm (16) aufweist, wobei die Rastöffnung (14) eine Auflagefläche (22) an ihrem Innenumfang aufweist, die derart ausgebildet ist, dass sie für eine, am freien Ende des Rastarms (16) gebildete Raststufe (18) in Einsteckrichtung einen Hinterschnitt bildet, wobei die Rastöffnung (14) die Auflagefläche (22) für die Raststufe (18) und eine der Auflagefläche (22) in der Rastöffnung (14) gegenüberliegend angeordnete Rampe (20) aufweist, wobei die Rampe (20) in Einsteckrichtung (E) gesehen hinter der Auflagefläche (22) angeordnet ist und die Querschnittsfläche der Rastöffnung (14) in Einsteckrichtung (E) verringert.

3. Elektroinstallationsgerät nach Anspruch 2,
**dadurch gekennzeichnet, dass** sich die Raststufe (18) und/oder die Auflagefläche (22) rechtwinklig zur Einsteckrichtung (E) erstrecken.

4. Elektroinstallationsgerät nach Anspruch 2,
**dadurch gekennzeichnet, dass** sich die Raststufe (18) und/oder die Auflagefläche (22) in einem Winkel zur Einsteckrichtung (E) erstrecken, wobei das zur Auflagefläche (22) weisende Ende der Raststufe (18) in Einsteckrichtung (E) gesehen zurückversetzt ist und das zur Raststufe (18) weisende Ende der Auflagefläche (22) in Montagerichtung (M) gesehen zurückversetzt ist.

5. Elektroinstallationsgerät nach Anspruch 3 oder 4,
**dadurch gekennzeichnet, dass** sich die Raststufe (18) und die Auflagefläche (22) parallel zueinander erstrecken.

6. Elektroinstallationsgerät nach einem der Ansprüche 2 bis 5,
**dadurch gekennzeichnet, dass** der Rastarm (16) an seinem freien Ende eine erste Schräge (24a) aufweist, die die Querschnittsfläche des Rastarms (16) in Einsteckrichtung (E) verringert.

7. Elektroinstallationsgerät nach einem der Ansprüche 2 bis 6,
**dadurch gekennzeichnet, dass** der Rastarm (16) an seinem freien Ende an der der Auflagefläche (22) zugewandten Seite eine zweite Schräge (24b) aufweist, die die Querschnittsfläche des Rastarms (16) in Einsteckrichtung (E) verringert und entgegen der Einsteckrichtung (E) die Raststufe (18) bildet.

8. Elektroinstallationsgerät nach einem der Ansprüche 2 bis 6,
**dadurch gekennzeichnet, dass** die Rastöffnung (14) in Einsteckrichtung (E) gesehen hinter der Auflagefläche (22) einen Aufnahmeraum (34) zur Aufnahme eines freien Endes eines Rastarms (16) aufweist, der Aufnahmeraum (34) derart ausgebildet ist, dass das freie Ende des Rastarms (16) rastend in dem Aufnahmeraum (34) angeordnet wird, wobei das freie Ende des Rastarms (16) spannungsfrei in dem Aufnahmeraum (34) angeordnet ist.

9. Elektroinstallationsgerät nach Anspruch 8,
**dadurch gekennzeichnet, dass** ein im Aufnahmeraum (34) angeordneter Teil des freien Endes des Rastarms (16) einen geringeren Querschnitt aufweist als der Aufnahmeraum (34).

10. Elektroinstallationsgerät nach einem der Ansprüche 2 bis 9,
**dadurch gekennzeichnet, dass** am freien Ende des Rastarms (16) eine in Einsteckrichtung (E) und/oder senkrecht zur Einsteckrichtung (E) geöffnete rechteckförmige Ausnehmung (24c) ausgebildet ist, welche die Querschnittsfläche des Rastarms (16) in Einsteckrichtung (E) gesehen hinter der Raststufe (18) sprunghaft verringert.

11. Elektroinstallationsgerät nach Anspruch 10,
**dadurch gekennzeichnet, dass** sich der Rastarm (16) in einem Teilabschnitt (16a) in Einsteckrichtung bis zu der Raststufe (18) fluchtend mit einem Teilabschnitt (4a) einer Außenwand (4) des Sockelteils (1) und fluchtend mit der Ausnehmung (24c) erstreckt.

12. Elektroinstallationsgerät nach einem der Ansprüche 2 bis 11,
**dadurch gekennzeichnet, dass** die Rastöffnung (14) in Einsteckrichtung (E) auf der Seite der Auflagefläche (22) einseitig einen sich verjüngenden Oberflächenverlauf (26) bis zur Auflagefläche (22) aufweist.

13. Elektroinstallationsgerät nach Anspruch 12,
**dadurch gekennzeichnet, dass** zwischen dem sich verjüngenden Verlauf (26) und der Auflagefläche (22) ein sich in Einsteckrichtung (E) erstreckender Übergangsabschnitt (36) ausgebildet ist, welcher den sich verjüngenden Verlauf (26) und die Auflagefläche (22) verbindet.

14. Elektroinstallationsgerät nach einem der Ansprüche 1 bis 13,
**dadurch gekennzeichnet, dass** der Schaltbereich (2) des Sockelteils (1) von einer Außenwand (4) umschlossen ist, wobei die Rastverbindung außerhalb der Außenwand (4) des Schaltbereiches (2) angeordnet ist.

15. Elektroinstallationsgerät nach Anspruch 14,
**dadurch gekennzeichnet, dass** die Rampe (20) an der Außenwand (4) des Schaltbereiches (2) angeordnet ist.

16. Elektroinstallationsgerät nach einem der Ansprüche 1 bis 15,
**dadurch gekennzeichnet, dass** die Kontaktgehäuse (12) im Sockelaufsatz (8) die elektrische Verbindung zum Schaltbereich (2) im Sockelteil (1) mittels Kontaktfahnen (12a) herstellen.

17. Elektroinstallationsgerät nach einem der Ansprüche 1 bis 16,
**dadurch gekennzeichnet, dass** der Schaltbereich (2) zwischen zwei sich gegenüberliegenden Aufnahmekammern (6) im Boden (30) jeweils eine Kontaktöffnung (32) zu dem in Montagerichtung (M) rückseitig angeordneten Sockelaufsatz (8) aufweist.

18. Elektroinstallationsgerät nach Anspruch 17,
**dadurch gekennzeichnet, dass** die Kontaktfahnen (12a) der Kontaktgehäuse (12) im Sockelaufsatz (8) durch die Kontaktöffnungen (32) in den Schaltbereich (2) ragen, wobei die Kontaktöffnungen (32) korrespondierend zu den Kontaktfahnen (12a) schlitzförmig ausgebildet sind.

19. Elektroinstallationsgerät nach einem der Ansprüche 1 bis 18,
**dadurch gekennzeichnet, dass** der Sockelaufsatz (8) und/oder das Sockelteil (1) jeweils als einstückiges Spritzgussteil geformt sind.

20. Elektroinstallationsgerät nach Anspruch 19,
**dadurch gekennzeichnet, dass** die Rastöffnung (14) in Montagerichtung (M) und in Einsteckrichtung (E) weisend offen ist.
